# EUROPÄISCHE PATENTSCHRIFT

(11) **EP 0 392 144 B1**
(45) Veröffentlichungstag und Bekanntmachung des Hinweises auf die Patenterteilung: **13.04.1994**
(21) Anmeldenummer: 90101987.7
(22) Anmeldetag: 01.02.1990
(51) Int. Cl.: C04B 33/13, C04B 35/00, C02F 11/00

(54) **Verwendung der Feinfraktion von Gewässersedimenten**
Use of the fine particle fraction of sediments from waters
Utilisation des particules fines alluviales

(30) Priorität: 13.04.1989 DE 3912062
(43) Veröffentlichungstag der Anmeldung: 17.10.1990
(73) Patentinhaber: Kreyenberg, Heiner, Dipl.-Ing. Dr., D-40885 Ratingen (DE)
(72) Erfinder: Kreyenberg, Heiner, Dipl.-Ing. Dr., D-40885 Ratingen (DE)
(74) Vertreter: Stenger, Watzke & Ring Patentanwälte

(56) Entgegenhaltungen:
- EP-A- 0 055 489
- EP-A- 0 168 532
- DE-A- 2 450 944
- DE-A- 2 723 825
- DE-A- 2 908 798
- CHEMICAL ABSTRACTS, Band 90, Nr. 4, Januar 1979, Seite 294, Zusammenfassung Nr.28141d, Columbus, Ohio, US; A.K. MISKARLI et al.: "Ceramic material formanufacturing structural articles", & SU-A-622 791 (05-09-1978),
- & OTKRYTIYA, IZOBRET., PROM. OBRAZTSY, TOVARNYE ZNAKI 1978,55(33), 88

## Beschreibung

Die Erfindung betrifft die bei der Entnahme von Sedimenten aus natürlichen und/oder künstlichen Gewässern in einem Aufbereitungsverfahren gewonnene, mechanisch entwässerte sowie anschließend auf einen Wassergehalt von maximal 20 bis 25% luftgetrocknete und mit Schadstoffen kontaminierte Feinfraktion einer überwiegend oder ausschließlich mineralischen Sortierung mit Bestandteilen im Korngrößenbereich bis zu 0,063 mm sowie mit bis zu 12 Gew.-% organischen Verunreinigungen.

Vermehrt stellt man sich heutzutage die Aufgabe, natürliche und/oder künstliche Gewässer, wie Seen, Flüsse, Wasserstraßen, Hafenbecken zu entschlammen und dabei den dem Gewässer entnommenen suspensionsartigen Schlamm in verschiedenen Verfahrensstufen von Schadstoffen zu reinigen und wiederverwendbare Recyclingprodukte zu gewinnen. Dabei ist es aus der DE-OS 36 20 700 bekannt, den aus einem Gewässer entnommenen Schlamm in verschiedenen Verfahrensstufen derart in eine Grobfraktion und in eine Feinfraktion mechanisch zu trennen, auszusondern und zu reinigen, daß möglichst viele Bestandteile einer Weiterverarbeitung zugeführt werden können.

Die Grobfraktion mit einer Korngröße von mehr als 0,063 mm ist dabei gering mit Schadstoffen belastet und kann daher ohne weiteres als Baustoff verwendet werden. So werden beispielsweise die Grobfraktionen von 0,063 mm bis 2 mm sowie von 2 mm bis 32 mm von Kiesbaggereien ohne Beanstandungen angenommen und der normalen Sand- und Kiessandverwertung zugeführt. Ausfallkörnungen von 0,063 mm bis 6/8 mm sind dabei brauchbare Zuschlagsstoffe zur Herstellung von Kalksandsteinen.

Anders verhält es sich mit den Feinfraktionen unterhalb von 0,063 mm, welche oft stark mit Schwermetallen belastet sind und darüber hinaus organische Bestandteile aufweisen. Das Spektrum der Feinfraktionen reicht dabei von 100% organischem Material bis zu 100% mineralischen Stoffen, wobei die mineralischen Stoffe aus 50 bis 70% SiO₂ bestehen. Bei den Feinfraktionen ist dabei jede beliebige Proportion zwischen den organischen und den mineralischen Bestandteilen möglich.

Sofern der Feinschlamn überwiegend aus organischem Material besteht, wie Faulschlamm aus Kläranlagen oder Faulschlamm aus Binnenseen, ist bei geringer Schadstoffbelastung nach einer Konditionierung mit hydraulischen Bindemitteln zur Erhöhung der Scherfestigkeit (bodenmechanischer Wert) eine Verwendung als Rekultivierungsboden oder Abdeckboden für Deponien möglich. Hierbei spielen die physikalischen Eigenschaften nur eine bau- und verarbeitungstechnische Rolle. Die Menge der chemischen Inhaltsstoffe, beispielsweise Nitrate, Phosphate etc., entscheiden über die Fruchtbarkeit des Bodens bei der Verwendung des Feinschlamms als Bodenrekultivierung.

Bei einer überwiegenden oder ausschließlichen mineralischen Sortierung der Feinfraktion, wobei diese mineralischen Schlämme oft aus den Sohlenbaggerungen in Bundeswasserstraßen oder als separat sortiertes Material aus Binnenseenentschlammungen gewonnen werden, ist aufgrund der Schadstoffbehaftung nachteiligerweise diese bei dem Aufbereitungsprozeß von Sand und Kieskorn befreite Feinfraktion einer Weiterverwendung nicht zugänglich und muß bislang in Deponien abgelagert werden.

In der DE-A-27 23 825 sowie der DE-A-24 50 944 ist die Verwendung der im Kalksteinwäscheschlamm vorhandenen Feststoffe als Rohstoffmaterial zur Herstellung von keramischen Produkten, insbesondere Ziegeln und Töpferwaren offenbart. Dieser Kalksteinwäscheschlamm wird bei der Kalksteinaufbereitung durch Brechen des Kalksteins, Sieben und Waschen des Kalksteins mit Wasser sowie Abtrennen der Bestandteile mit einer Korngröße von über etwa 0,1 mm aus dem beim Waschen mit Wasser angefallenen Schlamm erhalten.

In der DE-A-29 08 798 ist ein Verfahren zum Herstellen von Ziegeln oder Bausteinen offenbart. Dabei wird beschrieben, daß eine Zusammenstellung mit Natriumbentonit bei Zugabe zu einem Ziegelrohmaterial mit 50% oder mehr an Schiefer die Plastizität des Ziegelrohmaterials und dessen Festigkeit, also die Naßfestigkeit, dadurch angehoben wird, wenn das Natriumbentonit in Verbindung mit einem speziellen wasserlöslichen, anionischen Polyelektrolyten verwendet wird.

In der EP-A-0 168 532 wird ein Verfahren zum Behandeln von Schlamm, beispielsweise Hafenschlamm beschrieben. Dabei kann dieser Schlamm mit anderen Schlämmen oder anderen Materialien vermischt sein. Dieser Schlamm wird dann in eine plastische Masse durch Trocknung und/oder Mischung übergeführt. Die aus dieser plastischen Masse gewonnenen Stücke werden zu keramischen Körpern getrocknet und gebacken.

In der EP-A-0 055 489 wird ein Verfahren zum Ausflocken von in Schlämmen enthaltenen Mineralien beschrieben. Dabei werden nacheinander anionische Polymere und anschließend kationische Polymere zugeführt, welche es den Mineralien ermöglichen, sich abzusetzen.

Der Erfindung liegt die **Aufgabe** zugrunde, eine Verwertung einer eingangs genannten im bisherigen Recyclingverfahren verbleibenden Feinfraktion zu ermöglichen.

Als technische **Lösung** wird mit der Erfindung die Verwendung der eingangs charakterisierten Feinfraktion als Rohstoffmaterial für die Herstellung von baukeramischen Ziegeln, Verblendern, Klinkern, Hintermauersteinen und/oder Pflastersteinen vorgeschlagen, wobei der Feinfraktion zur Oberflächenvernetzung, Verbesserung der Wasserabscheidung und Bindung von Schadstoffen bei der mechanischen Entwässerung Polyelektrolyte zugegeben werden.

Die Nutzung der bei der Aufbereitung bei der Gewässerentschlammung entstehenden Feinfraktion als Ausgangsmaterial für eine Keramisierung zur Herstellung von baukeramischen Produkten stellt eine umweltfreundliche Verwendung dieser Feinfraktion dar, so daß diese nicht wie bislang in Deponien abgelagert werden muß. Insbesondere können auf kostengünstige Weise keramische Produkte hergestellt werden, ohne daß speziell im Tagebau gewonnener Grubenlehm dafür bereitgestellt werden muß. Neben einer umweltfreundlichen "Entsorgung" der Feinfraktion lassen sich somit auch kostengünstige keramische Produkte herstellen. Mit der kontaminierten Feinfraktion wird durch die Zugabe von Polyelektrolyten bei der mechanischen Entwässerung eine ausreichende Oberflächenvernetzung erreicht. Diese Oberflächenvernetzung der Feinschlammpartikel ist elektrostatisch derart geladen, daß die anorganischen Schadstoffe als Ionen angelagert werden und die organischen Schadstoffe in der Schlammfläche verbleiben. Die makromolekulare Vernetzung wirkt dabei gewissermaßen als hydrophober Regenschirm bei einer Außenlagerung der Schlämme, der jedoch Wasserdampf diffundieren läßt. Dies gewährleistet eine im Anschluß an die mechanische Entwässerung stattfindende Lufttrocknung auf einen Wassergehalt von maximal 20 bis 25%. Der zusätzliche Effekt durch das Vorhandensein von organischen Verunreinigungen bis zu 12 Gew.-% ist der Ausbrand der organischen Partikel, wodurch poröse Hohlräume erzeugt wird, welche die Wärmeisolation verbessern. Um diesen Effekt bei der herkömmlichen Ziegelherstellung zu erzielen, verwendet die Ziegelindustrie normalerweise Rohmaterial, welches mit Sägemehl angereichert ist.

Der als Geschiebelehm genutzte mineralisch kontaminierte Feinschlamm kann dabei als Rohstoffmaterial für die Keramikherstellung, insbesondere als Ziegelrohstoff ohne weitere Behandlung eingesetzt werden. Bei Hochtemperaturen werden die mineralischen Anteile des Feinschlamms so teil- oder vollkeramisiert, daß die Eluation der Schadstoffe, insbesondere der Schwermetalle ausbleibt oder nur äußerst gering ist. Dabei kann bei der Außenkeramisierung der Feinschlammpartikel eine Eluation von Schadstoffen als ausgeschlossen gelten. Dies ist die Voraussetzung dafür, daß der Feinschlamm der Weiterverwertung in Form einer Keramisierung zugeführt werden kann.

Bei der Keramisierung in einem Tunnelofen der Sinteranlage werden bei Temperaturen zwischen 1060°C und 1120°C alle organischen Schadstoffe ausgebrannt. Die anorganischen Schadstoffe werden dem Ziegelton bzw. dem Ziegellehm beim Sinterungsprozeß unlösbar durch Anschmelzen angelagert und dadurch fixiert. Die daraus entstehende glasartige Schlacke ist dabei gegen chemischen Angriff weitgehend beständig, so daß die erfindungsgemäße Weiterverwendung in der Baustoffindustrie als umweltfreundliches keramisches Rohstoffmaterial möglich ist. Vorteilhafterweise werden somit zukünftig die kontaminierten Schlämme nicht mehr Deponieraum in Anspruch nehmen müssen, sondern können im Sinne des Abfallgesetzes als Wirtschaftsgut uneingeschränkt verwendet werden. Der Geschiebelehm kann in jeder vorhandenen Ziegelei verarbeitet werden, ohne daß die bestehenden Infrastrukturen der Ziegelwerke geändert werden müssen. Die Verarbeitung von Geschiebelehm anstelle von Grubenlehm ist dabei auch betriebswirtschaftlich vergleichbar, wobei Zusatzkosten nur für die Zwischenlagerung und die Lufttrocknung anfallen.

Weitere Einzelheiten, Merkmale und Vorteile des Gegenstandes der Erfindung ergeben sich aus der nachfolgenden Beschreibung der zugehörigen Zeichnung, in der ein Verfahrensschema zur Flußentschlammung mit der erfindungsgemäßen Verwendung dargestellt ist.

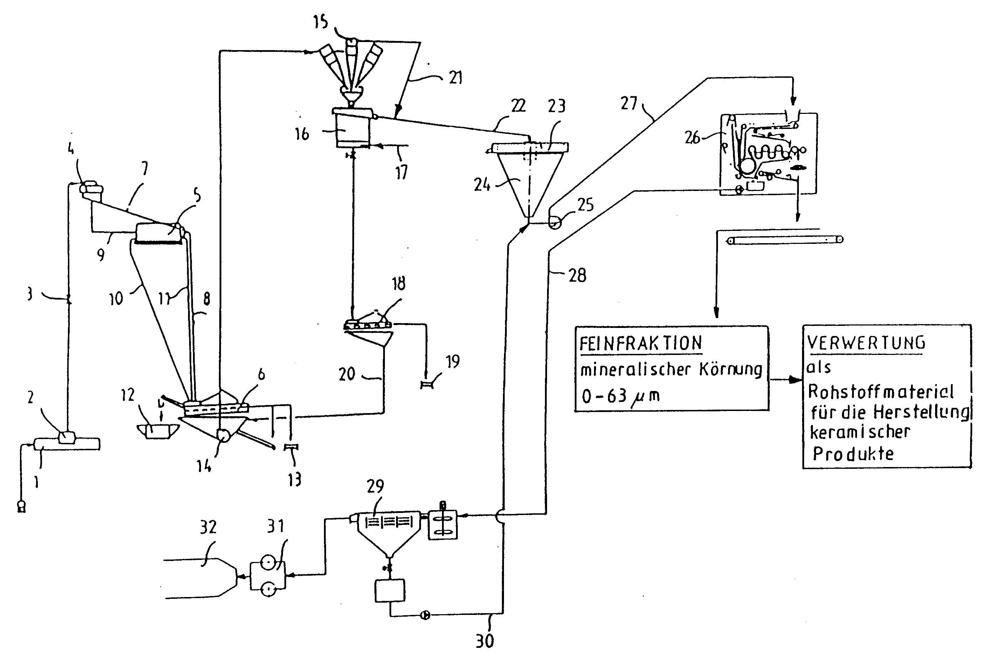

Das Fließschema der Zeichnung zeigt ein Gesamtverfahren mit den zugehörigen Vorrichtungen zur Reinigung von insbesondere mit Polymeren, Schwebstoffen, Phosphaten und/oder CSB verunreinigtem Wasser und zur Behandlung von dem Gewässer zur Reinigung entnommenem Schlamm.

Die Anlage besteht aus einem Cutter-Saugbagger 1 als Entnahmevorrichtung für den Schlamm aus einem natürlichen oder künstlichen Gewässer. Der Cutter-Saugbagger 1 ist mit einem Steinfangkorb 2 kombiniert, der beispielsweise eine Maschenweite von 100 mm hat und somit größere Bestandteile als 100 mm auffängt.

Das Baggergemisch wird unter Zwischenschaltung eines Mengenreglers 3 für die Anlagenbeschickung einer ersten Trennstufe, bestehend aus einem Siebzyklon 4, einer Waschtrommel 5 sowie einem zweistraßigen Schwingklassierer 6 zugeführt. In der ersten Trennstufe erfolgt eine Trennung der anorganischen und organischen Grobbestandteile oberhalb einer Größe von beispielsweise 6 mm von den Feinbestandteilen einer Größe unterhalb von 6 mm. In dem Siebzyklon 4 erfolgt eine Wasservorabscheidung und Vorabsiebung der Grobbestandteile oberhalb 6 mm, so daß über eine Leitung 8 Feinteile unter 6 mm (Feinschlamm) gemeinsam mit vorabgeschiedenem Wasser dem Schwingklassierer 6 zugeführt werden. Die im Siebzyklon 4 vorentwässerte Feststoffsuspension mit den Grobbestandteilen wird über einen Unterlauf 9 der Waschtrommel 5 zugeführt, die mit Schikanen versehen ist. Diese bewirken eine Abscheidung der groben organischen Bestandteile (Holz, Wurzeln etc.) von den groben anorganischen Bestandteilen (Steine, Kies, Sand etc. ), wobei der Austrag aus der Waschtrommel 5 separat über die Leitung 10 (organische Bestandteile) und die Leitung 11 (anorganische Bestandteile) erfolgt.

Der Schwingklassierer besteht aus zwei Bahnen, so daß über eine Leitung Leichtstoffe zu einem Container 12 abgeführt werden können. Über eine zweite Bahn gelangen anorganische Bestandteile > 2,5 mm zum Kieslager 13.

Auf den Bahnen des Schwingklassierers 6 werden durch mehrfaches Hin- und Herleiten die Grobbestandteile von den feinen organischen Partikeln gereinigt. Diese organischen Bestandteile können vom Container 12 aus gemeinsam mit den abgeschiedenen Holzteilen und den Wurzeln einer Verbrennung zur Energiegewinnung oder einer Kompostierung zugeführt werden. Auch der Kies aus dem Kieslager 13 kann wiederverwendet werden.

Mittels einer Förderpumpe 14 werden die anorganischen und organischen Feinbestandteile unterhalb einer Größe von 6 mm einem Multizyklon 15 in Suspension zugeführt. In dieser Zyklonanlage 15 erfolgt eine Abscheidung des Sandes zwischen einer Mindestgröße von 0,063 und 6 mm. Der Zyklonanlage ist dabei ein Schwertrübesortierer 16 mit einer Frischwasserzufuhr 17 nachgeschaltet, die den gereinigten Sand über einen Schwingentwässerer 18 einem Sandlager 19 zuführt. Das Filtratwasser aus dem Schwingentwässerer 18 wird über eine Leitung 20 zum Schwingklassierer zurückgeführt.

Die feinen mineralischen Bestandteile unterhalb 0,063 mm, die in der Zyklonanlage 15 nicht ausgesondert werden können, sowie die organischen Feinbestandteile werden über die Leitungen 21 (mineralische Trübe) und 22 (organische Trübe) einem Vorlagebecken 23 zugeführt, dem sich ein Kompressionseindicker 24 anschließt. Von dort aus erfolgt der Weitertransport mittels einer Förderpumpe 25 über eine Leitung 27 zu einer Siebbandpresse 26, die die dritte Trennstufe nach dem Zyklon 15 als zweiter Trennstufe bildet.

In der Siebbandpresse wird Filtratwasser getrennt von der Feinfraktion des Schlammkonzentrats und über eine Filtratwasserleitung 28 einer weiteren Behandlung in einem Lamellenklärer 29 zugeleitet. Aus diesem gelangt das Schlammkonzentrat über eine Rücklaufleitung 30 zum Kompressionseindicker 24 und von dort mittels der Pumpe 25 zur Siebbandpresse 26.

Das im Lamellenklärer 29 anfallende Ablaufwasser gelangt über eine Filtration 31 in den Vorfluter 32.

Die in der Siebbandpresse 26 anfallende Feinfraktion mineralischer Körnung mit Bestandteilen im Größenbereich bis zu 0,063 mm wird einer Verwendung als Rohstoffmaterial für die Herstellung von keramischen Produkten, insbesondere Baukeramiken wie Ziegel, Verblender, Klinker, Hintermauersteine, Pflastersteine oder dgl. zugeführt. Der Wassergehalt des Feinschlamms beträgt dabei maximal 20 bis 25%. Der Gehalt des Feinschlamms an organischen Zusätzen beträgt bis zu 12 Gew.-%. Sofern der Feinschlamm mit Schadstoffen kontaminiert ist, werden diesem zur Oberflächenvernetzung bei der mechanischen Entwässerung Polyelektrolyte zugegeben.

Auf diese Weise ist es nicht mehr wie bisher notwendig, bei der Gewässerentschlammung anfallende, kontaminierte Feinschlämme Deponien zuzuführen, sondern die mineralischen Feinschlämme können als Wirtschaftsgut uneingeschränkt als Rohstoffmaterial für die Herstellung von keramischen Produkten verwendet werden, wobei Schadstoffe bei der Keramisierung unlösbar eingebunden werden.

## Patentansprüche

1. Verwendung der bei der Entnahme von Sedimenten aus natürlichen und/oder künstlichen Gewässern in einem Aufbereitungsverfahren gewonnenen, mechanisch entwässerten sowie anschließend auf einen Wassergehalt von maximal 20 bis 25% luftgetrockneten und mit Schadstoffen kontaminierten Feinfraktion einer überwiegend oder ausschließlich mineralischen Sortierung mit Bestandteilen im Korngrößenbereich bis zu 0,063 mm sowie mit bis zu 12 Gew.-% organischen Verunreinigungen als Rohstoffmaterial für die Herstellung von baukeramischen Ziegeln, Verblendern, Klinkern, Hintermauersteine und/oder Pflastersteine, wobei der Feinfraktion zur Oberflächenvernetzung, Verbesserung der Wasserabscheidung und Bindung von Schadstoffen bei der mechanischen Entwässerung Polyelektrolyte zugegeben wurden.

## Claims

1. Use of the fine fraction, which is obtained during the removal of sediments from natural and/or artificial waters by a dressing process, has been mechanically drained and then air-dried to a water content of at most 20 to 25% and is contaminated with pollutants, having a predominantly or exclusively mineral-type range with constituents in the grain size range of up to 0.063 mm and containing up to 12% by weight of organic impurities, as a raw material for the manufacture of ceramic building tiles, facing bricks, clinkers, back-up blocks and/or paving stones, polyelectrolytes having been added to the fine fraction for surface crosslinking, improvement of water removal and binding of pollutants during the mechanical draining.

## Revendications

1. Utilisation de la fraction fine provenant du prélèvement de sédiments des eaux naturelles et/ou artificielles récupérés dans un procédé de traitement, déshydratés mécaniquement et séchés ensuite à l'air jusqu'à une teneur en eau égale, au maximum, à 20 à 25% et contaminés par des substances toxiques d'un triage principalement ou essentiellement minéral avec des constituants dont la granulométrie s'étend jusqu'à 0,063 mm ainsi qu'avec jusqu'à 12% en poids d'impuretés organiques, comme matière première pour la fabrication de briques, de pierres de parements, de klinkers, de blocs pour maçonneries non apparentes et/ou de carrelages en céramique pour la construction dans laquelle la fraction fine reçoit une addition de polyélectrolytes pour réticuler la surface, améliorer la séparation de l'eau et fixer les substances toxiques au cours de la déshydratation mécanique.
